(19) Europäisches Patentamt

European Patent Office

Office européen des brevets

(11) Numéro de publication: **0 270 148 B1**

# (12) FASCICULE DE BREVET EUROPEEN

(45) Date de publication de fascicule du brevet: **26.01.94** (51) Int. Cl.⁵: **G01S 13/34**

(21) Numéro de dépôt: **87202059.9**

(22) Date de dépôt: **27.10.87**

(54) **Dispositif radar pour mesurer la distance qui le sépare d'un objet.**

(30) Priorité: **31.10.86 FR 8615211**

(43) Date de publication de la demande:
**08.06.88 Bulletin 88/23**

(45) Mention de la délivrance du brevet:
**26.01.94 Bulletin 94/04**

(84) Etats contractants désignés:
**DE FR GB IT SE**

(56) Documents cités:
**FR-A- 2 552 905**
**GB-A- 2 055 001**
**US-A- 2 686 302**
**US-A- 4 268 828**

**THE RADIO AND ELECTRONIC ENGINEER,
vol. 42, no. 7, juillet 1972, pages 344-348,
Londres, GB; A. TONKIN et al.: "An application of correlation to radar systems"**

**PROCEEDINGS OF THE 15TH EUROPEAN MICROWAVE CONFERENCE, Paris, 9-13 septembre 1985, pages 131-136, Microwave Exhibitions and Publishers Ltd, Tunbridge Wells, Kent, GB; N. KAROUCHE et al.: "POSEIDON radar altimeter characteristics and performances"**

(73) Titulaire: **THOMSON-TRT DEFENSE**
**88, rue Brillat Savarin**
**F-75013 Paris(FR)**

(84) Etats contractants désignés:
**DE FR GB IT SE**

(72) Inventeur: **Hethuin, Serge Société Civile
S.P.I.D.**
**209, rue de l'Université**
**F-75007 Paris(FR)**
Inventeur: **Crepin, Hugues Société Civile
S.P.I.D.**
**209, rue de l'Université**
**F-75007 Paris(FR)**

(74) Mandataire: **Courtellemont, Alain et al**
**THOMSON-CSF,**
**SCPI,**
**B.P. 329,**
**50, rue Jean-Pierre Timbaud**
**F-92402 Courbevoie Cédex (FR)**

## Description

La présente invention concerne un dispositif radar pour mesurer la distance "h" qui le sépare d'un objet, dispositif comportant des moyens d'émission pour émettre vers l'objet une onde modulée en fréquence, des moyens de réception comprenant des moyens de mélange pour recevoir l'onde après réflexion sur l'objet et pour fournir une onde de battement entre l'onde émise et l'onde reçue, des moyens de traitement numérique rapide pour effectuer une opération de transformation temporelle-fréquentielle sur l'onde de battement, des moyens de sortie pour fournir l'indication de la distance "h" et des moyens de gestion constitués à partir d'un microprocesseur executant les instructions d'un programme implanté dans une mémoire morte tandis qu'il est prévu une première liaison pour relier les moyens de gestion aux moyens de sortie, une deuxième liaison pour relier les moyens de gestion aux moyens de réception, une troisième liaison pour relier les moyens de gestion aux moyens de traitement numérique rapide, une quatrième liaison entre les moyens de gestion et les moyens d'émission, lesdites liaisons étant de préférence bidirectionnelles.

Le genre d'application visé plus particulièrement par l'invention est la détermination de l'altitude d'un aéronef, le dispositif étant embarqué à bord de ce dernier tandis que l'objet est constitué par le sol.

Depuis quelque temps, on s'efforce d'utiliser pour cette détermination de distance des circuits de traitement numérique (voir par exemple le brevet des Etats-Unis d'Amérique N° 4 568 938).

Un dispositif du genre précité est décrit dans un autre brevet des Etats-Unis d'Amérique N° 4 268 828. Ce dispositif connu utilise des moyens de gestion constitués à partir d'un microprocesseur programmable qui agit sur les moyens de réception afin que les mesures pour déterminer "h" puissent s'effectuer aux niveaux adéquats et de là on peut fournir de bonnes informations aux moyens de sortie.

Cependant avec ce dispositif on est confronté avec l'inconvénient que les moyens de traitement numérique rapide, surtout lorsqu'ils présentent un certain degré de sophistication, sont les éléments les plus sujets aux défaillances.

Pour donner une information sur "h" malgré la défaillance des moyens de traitement rapide, un dispositif du genre mentionné dans le préambule est remarquable en ce que les moyens de traitement numérique rapide comportent un organe de transformation temporelle fréquentielle opérant sur les signaux de sortie d'un dispositif de corrélation des signaux de battement, et en ce que le programme implanté dans la mémoire morte des moyens de gestion contient des instructions pour effectuer une opération de transformation temporelle-fréquentielle pour suppléer à une défaillance des moyens de traitement numérique rapide.

La présente invention sera mieux comprise à l'aide de la description suivante, accompagnée des dessins ci-annexés. Sur ces dessins :

La figure 1 montre un dispositif radar conforme à l'invention.

La figure 2 montre plus en détail les moyens de traitement rapide reliés avec les moyens de gestion ainsi que l'unité de visualisation.

La figure 3 montre la commande de niveau des moyens d'émission.

La figure 4 montre la commande de fréquence des moyens d'émission.

La figure 5 montre la commande de gain des moyens de réception.

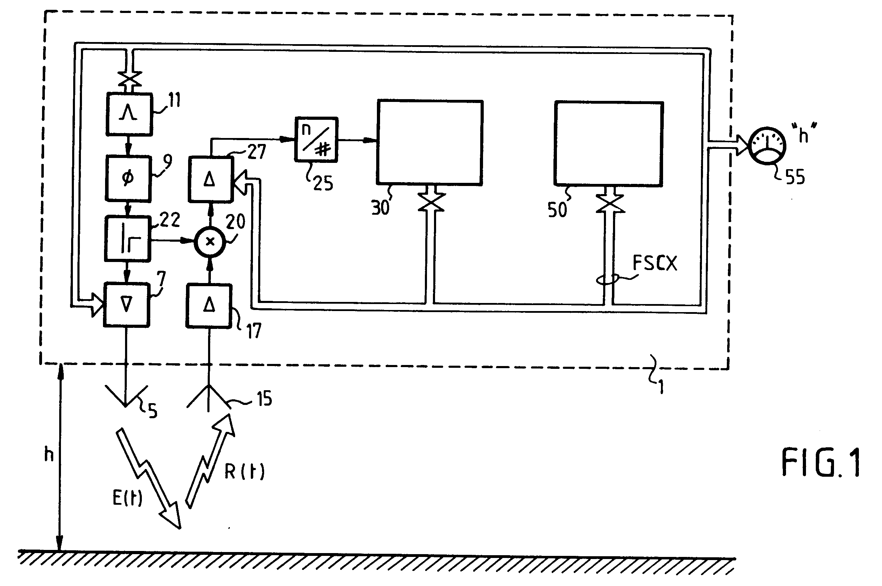

La référence 1 portée sur la figure 1 indique le dispositif de l'invention. La référence 2 indique l'objet séparé d'une distance "h" du dispositif. Dans l'exemple décrit se rapportant à l'application envisagée de radionavigation, l'objet 2 est la surface du sol tandis que le dispositif 1 est embarqué à bord d'un aéronef non représenté.

Pour mesurer cette distance "h", on utilise une onde $E(t)$ modulée linéairement en fréquence à partir d'une fréquence porteuse $f_0$ (par exemple 4 GHz) sur une plage de fréquence $\Delta F$, ce qui s'écrit :

$$(1) \qquad E(t) = A \cos[2\Pi(f_0 + \tfrac{\Delta F}{T} t)t]$$

pour t variant dans les laps de temps T où la dent de scie se produit.
A est une constante définissant l'amplitude de l'onde.

Cette onde est émise dans l'espace à partir d'une antenne d'émission 5 qui est connectée à la sortie d'un amplificateur d'émission 7. Cet amplificateur 7 amplifie le signal fourni par un oscillateur 9 à commande de fréquence par tension. Un générateur de signaux en dents de scie portant la référence 11 fournit la tension de commande pour cet oscillateur 9. L'onde $E(t)$ est réfléchie par l'objet 2 de sorte que l'onde reçue s'écrit :

$$(2) \qquad R(t) = B \cos[2\Pi(f_0 + \tfrac{\Delta F}{T} (t-\tau))t]$$

où B est une constante définissant le niveau reçu et $\tau$ représente le retard entre l'onde émise et l'onde réfléchie.

Pour recevoir cette onde $R(t)$, le dispositif radar 1 est muni d'une antenne de réception 15, d'un amplificateur haute fréquence de réception 17.

Un circuit mélangeur 20 effectue le mélange de l'onde reçue amplifiée par l'amplificateur 17 avec l'onde d'émission prélevée au moyen d'un coupleur directif 22 inséré entre l'oscillateur 9 et l'amplificateur d'émission 7. Ce mélangeur 20 fournit une onde M(t) :

(3)     $M(t) = C \cos[2\Pi \frac{\Delta E}{T} \tau t]$

où C représente une constante.
De la fréquence "fb" du signal M(t) on déduit la distance "h" :

$fb = \tau \frac{\Delta E}{T}$ où $\tau = \frac{2h}{c}$

(c = vitesse de la lumière)
d'où :

$$(4) \qquad h = \frac{fb.c}{2\Delta F} T$$

Le signal M(t) est d'une façon avantageuse traité sous forme numérique ; pour cela, on a prévu un convertisseur analogique-numérique 25 pour convertir ce signal M(t) qui a subi au-paravant une amplification apportée par un amplificateur de battement 27.

Le convertisseur analogique-numérique 25 fournit des échantillons numériques à un ensemble de traitement numérique rapide 30 qui est prévu pour en former des spectres en fréquence. Ces spectres sont ensuite traités par un ensemble de gestion 35 de façon à fournir à l'utilisateur la valeur de la distance "h" sur un indicateur 55.

Le dispositif radar est muni d'un ensemble de gestion 50 pour fournir notamment à l'utilisateur la valeur "h" par l'intermédiaire d'une unité de visualisation 55 et pour piloter notamment le générateur de signaux de dents de scie 11 et aussi l'ensemble de traitement numérique rapide. En outre, l'ensemble de gestion pilote le niveau de l'onde d'émission en agissant sur une commande d'atténuation incorporée à l'amplificateur d'émission 7. Pour montrer le pilotage de ces éléments par l'ensemble de gestion, on a représenté sur les figures un faisceau FSCX qui les relie à l'ensemble de gestion 50. Il va de soi qu'en pratique les différentes liaisons entre les éléments et l'ensemble de gestion peuvent ne pas emprunter le même parcours et de ce fait n'ont pas forcément l'aspect physique d'un faisceau de fils.

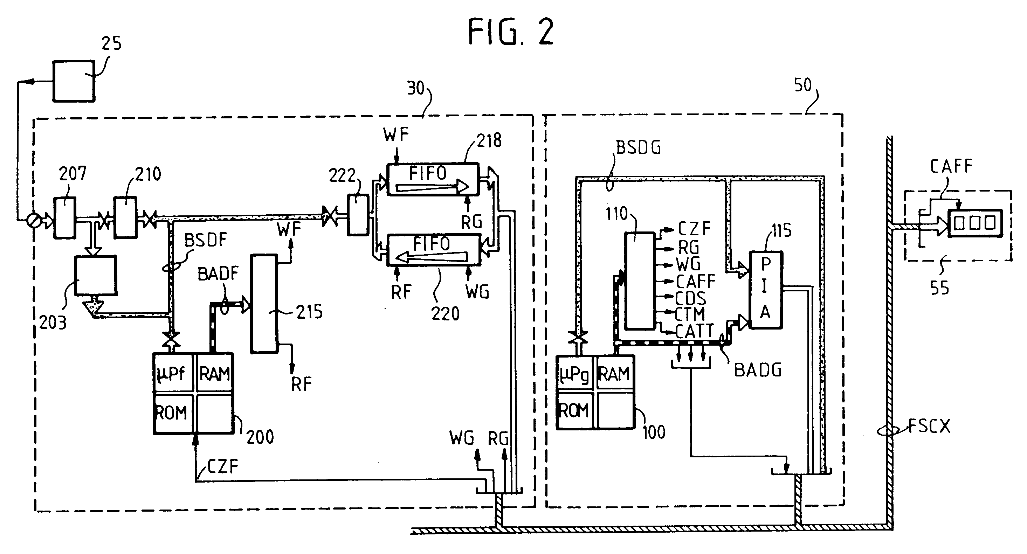

A la figure 2, on a représenté plus en détail l'ensemble de gestion 50, l'ensemble de traitement numérique rapide 30 et l'unité de visualisation 55.

L'ensemble de gestion est constitué autour d'une unité à microprocesseur 100 comprenant, comme cela est bien connu, le microprocesseur proprement dit µPg (par exemple le 6809 fabriqué par MOTOROLA), une mémoire vive RAM et une mémoire morte ROM dans laquelle est enregistré le programme souhaité par l'utilisateur. Cette unité communique à l'extérieur par l'intermédiaire d'une ligne BSDG pour transmettre des données et d'une ligne BADG pour transmettre des codes d'adresses.

L'ensemble 50 comporte un décodeur de codes d'adresse qui décode les codes transmis par la ligne BADG ; ce décodeur fournit différents signaux CZF, CAFF, RG, WG, CDS, CTM, CATT qui sont transmis vers différents éléments du dispositif radar de l'invention par l'intermédiaire du faisceau FSCX. L'ensemble 50 comporte aussi un circuit d'interface 115 programmable (par exemple le circuit immatriculé 6820, fabriqué par MOTOROLA) dont les accès sont reliés à des fils faisant partie du faisceau FSCX.

L'ensemble de traitement numérique est formé aussi d'une unité à microprocesseur 200 comportant un microprocesseur proprement dit fonctionnant rapidement (par exemple le TMS 320 fabriqué par Texas Instruments) une mémoire morte ROM et une mémoire vive RAM ; cette unité est programmée pour effectuer des transformations de Fourier rapide (on pourra à ce sujet consulter l'article de SURENDER HAGAR et al intitulé "µC builds FFT band spectrum analyzer" paru dans le recueil "Signal Processing with the TMS 320" édité par Texas Instruments). La transformation de Fourier est effectuée sur les signaux de sortie d'un dispositif d'autocorrélation 203 d'un type décrit dans la demande de brevet français N° 85 12 337 déposée le 13 août 1985 au nom de la Demanderesse. Les signaux de sortie de ce dispositif sont transmis par une ligne de transmission de données BSDF connectée à l'unité 200. L'entrée des signaux à autocorréler du dispositif est reliée à la sortie du convertisseur numérique-analogique 25 par l'intermédiaire d'un registre 207. Un deuxième registre bidirectionnel 210 relie cette entrée à la ligne BSDF. Ainsi, il est possible de tester le bon fonctionnement du dispositif 203. Pour cela, le registre 207 est mis à l'état bloqué et des données préétablies provenant de l'unité 200 peuvent être injectées dans le dispositif et, de là, il devient possible de vérifier si ces données ont été correctement corrélées. Il est prévu aussi un décodeur de codes d'adresses 215 connecté sur la ligne BADF transmettant des codes d'adresses issus de l'unité 200 ; ce décodeur 215 fournit notamment des signaux WF et RF. L'ensemble 30 est connecté au faisceau FSCX par l'intermédiaire de deux mémoires 218 et 220 du type première donnée entrée, première donnée sortie (mémoire FIFO du genre LS222). L'entrée de la mémoire 218 est connectée par l'intermédiaire d'un registre bidirectionnel 222 à la ligne BSDF et sa sortie à la ligne BSDG par l'intermédiaire du faisceau FSCX. L'entrée de la mémoire 220 est reliée à la ligne BSDG toujours par l'intermédiaire du faisceau FSCX, tandis que sa sortie est reliée à la ligne BSDF par l'intermédiaire du registre 222. Les signaux WF et RF permettent respectivement d'écrire dans la mémoire 210 et de lire dans la mémoire 220, les données à écrire et à lire concernant l'unité 200. Les signaux WG et RG traitant par le faisceau FSCX permettent respectivement l'écriture dans la mémoire 220 et la lecture du contenu de la mémoire 218, les dernières données à écrire et à lire concernant l'unité 100. Le signal CZF transitant par la ligne BSCC peut être utilisé pour initialiser ou reinitialiser l'unité 200.

L'unité de visualisation 55 permet d'afficher le résultat fourni par l'unité 100 par l'intermédiaire de la ligne BSDG transitant par le faisceau FSCX. C'est le signal CAFF affecté à l'unité 55 qui fixe la destination des données transmises par la ligne BSDG.

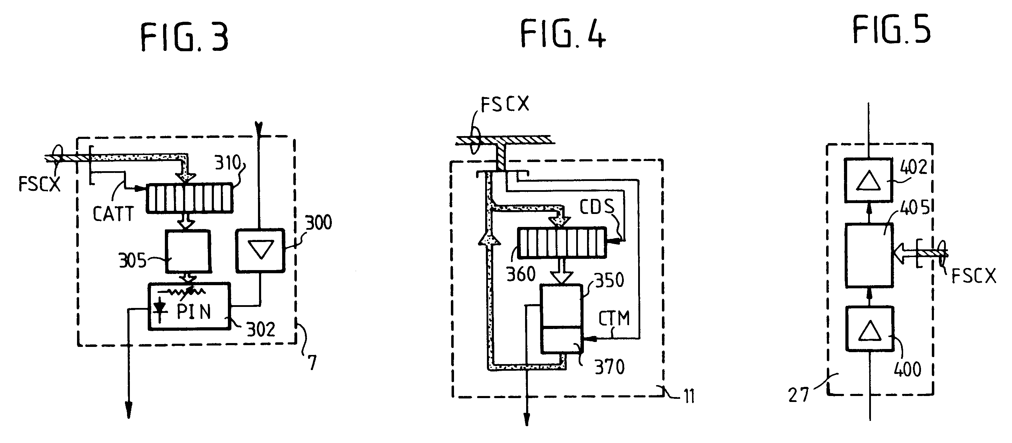

A la figure 3 on a représenté une manière selon laquelle on pourrait commander le niveau d'émission en agissant sur l'amplificateur d'émission 7. Cet amplificateur est formé d'un amplificateur à gain constant 300 suivi d'un atténuateur à diodes PIN commutables 302. La commutation de ces diodes est déterminée par un circuit de transcodage 305 qui convertit en un code de commutation le code continu dans un registre 310. Les entrées de ce registre 310 sont reliées à la ligne BSDG par l'intermédiaire du faisceau FSCX. Pour que les données transmises par ces lignes soient enregistrées dans le registre 310, il faut que le signal CATT transitant par le faisceau FSCX soit actif.

La figure 4 montre comment le générateur de signaux en dents de scie est piloté par l'ensemble de gestion 50. Le générateur est élaboré autour d'un circuit 350 décrit dans le brevet européen N° 0 113 975. La durée des dents de scie est déterminée par un code contenu dans un registre 360. Les entrées de ce registre 310 sont mises en relation avec la ligne BSDG par l'intermédiaire du faisceau FSCX lorsque le signal CDS transitant aussi par ce faisceau est actif. Un circuit de minutage 370 est adjoint au circuit 350. Ce circuit de minutage 370 (par exemple le circuit immatriculé 6840 et fabriqué par MOTOROLA) détermine la durée réelle de la dent de scie et cette durée est communiquée à l'ensemble de gestion par l'intermédiaire de la ligne BSDG transitant dans le faisceau FSCX. Cette communication n'a lieu que si le signal CTM transitant par le faisceau FSCX est actif.

La figure 5 montre la manière dont on fait varier le gain de l'amplificateur de réception 27. Cet amplificateur est formé de deux amplificateurs à gain fixe 400 et 402 montés en cascade et entre lesquels est monté un atténuateur 405. Cet atténuateur est en fait un convertisseur numérique-analogique logarithmique (par exemple du type immatriculé AD7118) ; ce convertisseur fournit un signal de sortie qui est à la fois dépendant du code d'entrée et du signal d'entrée. Le code d'entrée provient du circuit 115 transitant par le faisceau FSCX.

La structure du dispositif conforme à l'invention permet, par programmation, de satisfaire les souhaits les plus divers de l'utilisateur. Par exemple :

- en agissant sur le générateur 11 on peut faire varier la durée T (et la mesurer ensuite par le circuit 370 pour des calculs plus précis) de sorte que la fréquence fb (voir formule (4)) reste dans des limites convenant au traitement apporté par l'ensemble de traitement numérique rapide 30.
- en agissant sur le niveau d'émission au moyen de l'atténuateur 302 (figure 3) on peut obtenir un niveau d'émission le plus faible possible compatible avec une bonne mesure de "h", ce qui permet une moindre perturbation des appareils voisins.
- en agissant sur le gain de l'amplificateur 27, l'amplitude des signaux à traiter par l'ensemble 30 est ajustée à sa valeur optimale.
- L'ensemble de gestion 50 peut déclencher un test de l'ensemble de traitement 30 et prendre des mesures en vue des défaillances de ce dernier.

**Revendications**

1. Dispositif radar pour mesurer la distance "h" qui le sépare d'un objet, dispositif comportant des moyens d'émission (11, 9, 7, 5...) pour émettre vers l'objet une onde modulée en fréquence, des moyens de réception (15, 17, 20, 21...) comprenant des moyens de mélange (20) pour recevoir l'onde après réflexion sur l'objet et pour fournir une onde de battement entre l'onde émise et l'onde reçue, des moyens de traitement numérique rapide (30) pour effectuer une opération de transformation temporelle-fréquentielle sur l'onde de battement, des moyens de sortie (55) pour fournir l'indication de la distance "h" et des moyens de gestion (50) constitués à partir d'un microprocesseur exécutant les instructions d'un programme implanté dans une mémoire morte tandis qu'il est prévu une première liaison (FSX) pour relier les moyens de gestion aux moyens de sortie, une deuxième liaison (FSX) pour relier les moyens de gestion aux moyens de réception, une troisième liaison (FSX) pour relier les moyens de gestion aux moyens de traitement numérique rapide, une quatrième liaison (FSX) entre les moyens de gestion et les moyens d'émission, lesdites liaisons étant de préférence bidirectionnelles, caractérisé en ce que les moyens de traitement numérique rapide comportent un organe de transformation temporelle fréquentielle opérant sur les signaux de sortie d'un dispositif de corrélation des signaux de battement, et en ce que le programme contient des instructions pour effectuer une opération de transformation temporelle-fréquentielle pour suppléer à une défaillance des moyens de traitement numérique rapide.

2. Dispositif radar selon la revendication 1, caractérisé en ce que les moyens d'émission comportent un oscillateur (9) muni d'une commande de caractéristiques de modulation de fréquence connectée à la quatrième liaison.

3. Dispositif radar selon l'une des revendications 1 ou 2, caractérisé en ce que les moyens d'émission comportent un réseau d'atténuation de l'onde émise connecté à la quatrième liaison.

4. Dispositif radar selon l'une des revendications 1 à 3, caractérisé en ce que l'organe de transformation est constitué par un microprocesseur rapide auquel est rattachée une mémoire morte dans laquelle est implanté notamment un programme pour l'opération de transformation temporelle-fréquentielle.

5. Dispositif radar selon l'une des revendications 1 à 4, caractérisé en ce qu'il est prévu deux ensembles de mémoires du type première donnée entrée, première donnée sortie (mémoire FIFO) pour former la troisième liaison.

6. Dispositif radar selon l'une des revendications 1 à 5, caractérisé en ce que les moyens de réception comportent un amplificateur de signal de battement rattaché à un atténuateur muni d'une commande d'atténuation connectée à la deuxième liaison.

**Claims**

1. Radar device for measuring the distance "h" which separates it from an object, which device includes transmission means (11, 9, 7, 5...) for transmitting a frequency-modulated wave towards the object, receiving means (15, 17, 20, 21...) comprising mixing means (20) for receiving the wave after reflection from the object and for providing a beat wave between the transmitted wave and the received wave, high-speed digital processing means (30) for carrying out a time/frequency transformation operation on the beat wave, output means (55) for providing the indication of the distance "h" and management means (50) consisting of a microprocessor executing the instructions of a program installed in a read-only memory whilst there is provided a first link (FSX) for linking the management means to the output means, a second link (FSX) for linking the management means to the receiving means, a third link (FSX) for linking the management means to the high-speed digital processing means, and a fourth link (FSX) between the management means and the transmission means, the said links preferably being two-way, characterized in that the high-speed digital processing means include a time frequency transformation unit operating on the output signals from a device for correlating the beat signals, and in that the program contains instructions for carrying out a time/frequency transformation operation to make up for a deficiency in the high-speed digital processing means.

2. Radar device according to Claim 1, characterized in that the transmission means include an oscillator (9) endowed with a control of frequency modulation characteristics which is connected to the fourth link.

3. Radar device according to one of Claims 1 or 2, characterized in that the transmission means include a network for attenuating the transmitted wave which is connected to the fourth link.

4. Radar device according to one of Claims 1 to 3, characterized in that the transformation unit consists of a high-speed microprocessor to which is attached a read-only memory in which is installed in particular a program for the time/frequency transformation operation.

5. Radar device according to one of Claims 1 to 4, characterized in that there are provided two memory assemblies of the first-in, first-out type (FIFO memory) in order to form the third link.

6. Radar device according to one of Claims 1 to 5, characterized in that the receiving means include a beat signal amplifier attached to an attenuator endowed with an attenuation control connected to the second link.

**Patentansprüche**

1. Radargerät zur Messung des Abstands h eines Ziels, wobei das Gerät Sendemittel (11, 9, 7, 5, ...) zum Aussenden einer frequenzmodulierten Welle in Richtung auf das Ziel, Empfangsmittel (15, 17, 20, 21, ...) mit einer Mischstufe (20), um die Welle nach Reflexion am Ziel zu empfangen und eine Überlagerungswelle zwischen der ausgesendeten und der empfangenen Welle zu liefern, schnelle digitale Verarbeitungsmittel (30) zur Zeit-Frequenz-Transformation der Überlagerungswelle, Ausgangsmittel (55), um die Angabe über den Abstand h zu liefern, und Steuermittel (50) mit einem Mikroprozessor enthält, die die Befehle eines in einem Festwertspeicher enthaltenen Programms ausführen, wobei eine erste Verbindung (FSX) zwischen den Steuermitteln und den Ausgangsmitteln, eine zweite Verbindung (FSX) zwischen den Steuermitteln und den Empfangsmitteln, eine dritte Verbindung (FSX) zwischen den Steuermitteln und den schnellen digitalen Verarbeitungsmitteln und eine vierte Verbindung (FSX) zwischen den Steuermitteln und den Sendemitteln vorgesehen sind und diese Verbindungen vorzugsweise in beiden Richtungen wirksam sind, dadurch gekennzeichnet, daß die schnellen digitalen Verarbeitungsmittel ein Zeit-Frequenz-Transformationsorgan enthalten, das die Ausgangssignale einer Korrelationseinrichtung der Überlagerungssignale verarbeitet, und daß das Programm Befehle enthält, um eine Zeit-Frequenz-Transformationsoperation durchzuführen, um bei einem Ausfall der schnellen digitalen Verarbeitungsmittel Hilfe zu leisten.

2. Radargerät nach Anspruch 1, dadurch gekennzeichnet, daß die Sendemittel einen Oszillator (9) mit einer Steuerung von Frequenzmodulationskennwerten enthalten, der an die vierte Verbindung angeschlossen ist.

3. Radargerät nach einem der Ansprüche 1 bis 2, dadurch gekennzeichnet, daß die Sendemittel ein Netz zur Dämpfung der Sendewelle enthalten, das an die vierte Verbindung angeschlossen ist.

4. Radargerät nach einem der Ansprüche 1 bis 3, dadurch gekennzeichnet, daß das Transformationsorgan von einem schnellen Mikroprozessor gebildet wird, dem ein Festwertspeicher zur Speicherung insbesondere eines Programms zur Durchführung der Zeit-Frequenztransformation zugeordnet ist.

5. Radargerät nach einem der Ansprüche 1 bis 4, dadurch gekennzeichnet, daß zwei Speichereinheiten vom FIFO-Typ zur Bildung vorgesehen sind, die die dritten Verbindung bilden.

6. Radargerät nach einem der Ansprüche 1 bis 5, dadurch gekennzeichnet, daß die Empfangsmittel einen Verstärker für das Überlagerungssignal enthalten, der mit einem Dämpfungsglied verbunden ist, dessen Dämpfungssteuerung an die zweite Verbindung angeschlossen ist.

FIG.1

FIG. 2

# FIG. 3

FSCX

CATT

310

305

300

PIN

302

7

# FIG. 4

FSCX

CDS

360

350

CTM

370

11

# FIG. 5

402

405

FSCX

400

27

EP 0 270 148 B1

6